# EUROPÄISCHE PATENTSCHRIFT

(11) **EP 2 229 517 B1**
(45) Veröffentlichungstag und Bekanntmachung des Hinweises auf die Patenterteilung: **04.01.2012**
(21) Anmeldenummer: 08870313.7
(22) Anmeldetag: 18.11.2008
(51) Int. Cl.: F02C 6/08, F01D 25/14, F01D 11/18

(54) **Verdichter für ein Gasturbinentriebwerk mit radial geteilter Kühlluft-Entnahmekammer**
Compressor for a gas turbine engine with radially divided cooling air bleed manifold
Compresseur pour moteur à turbine à gaz avec collecteur divisé radialement pour le prélèvement d'air de refroidissement

(30) Priorität: 11.01.2008 EP 08000498
(43) Veröffentlichungstag der Anmeldung: 22.09.2010
(73) Patentinhaber: Siemens Aktiengesellschaft, 80333 München (DE)
(72) Erfinder: MAGHON, Hans, 45481 Mülheim An Der Ruhr (DE); ALASTI, Madjid, 45479 Mülheim An Der Ruhr (DE)
(86) Internationale Anmeldenummer: PCT/EP2008/065761
(87) Internationale Veröffentlichungsnummer: WO 2009/086982

(56) Entgegenhaltungen:
- EP-A- 1 167 722
- EP-A- 1 614 863
- GB-A- 2 054 741
- US-A- 4 303 371
- US-A- 5 160 241
- US-A- 5 203 162
- US-A1- 2003 223 863

## Beschreibung

Die Erfindung betrifft einen Axialverdichter für eine Gasturbine, mit einem im Querschnitt ringförmigen Strömungspfad für ein darin zu komprimierendes Medium, wobei der Strömungspfad radial außen von einer im Querschnitt ringförmigen Außenwand begrenzt ist, und mit einem Verdichtergehäuse, welches die Außenwand unter Bildung mindestens eines dazwischen angeordneten Sammelraums umgibt, und mit zumindest einer Entnahmeöffnung in der Außenwand zum Auskoppeln eines Teils des im Strömungspfad strömenden Mediums in den Sammelraum sowie mit zumindest einer im Gehäuse angeordneten Öffnung zum Abführen des ausgekoppelten Teils des Mediums aus dem Gehäuse.

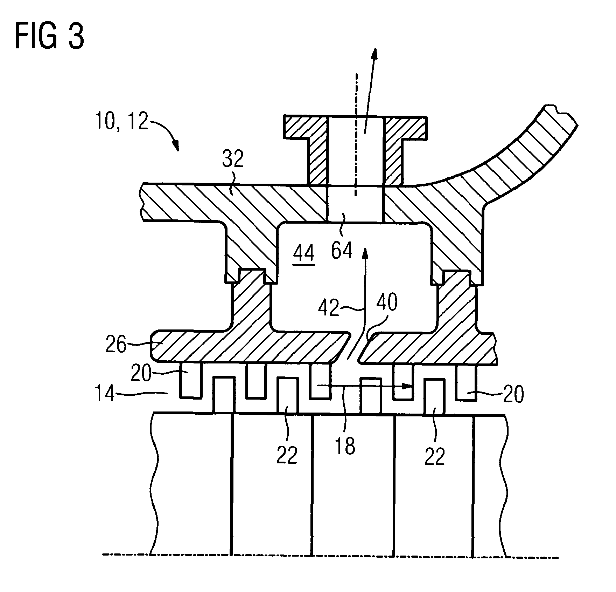

Es ist bekannt, dass Gasturbinen heißgasbeaufschlagte Bauteile in der Turbine oder Brennkammer aufweisen, welche mittels Kühlluft gekühlt werden. Die Kühlung der Bauteile erfolgt, damit diese den heißen Temperaturen des Heißgases dauerhaft standhalten. Als Kühlluft wird bekanntermaßen Verdichterluft verwendet, die an unterschiedlichen Stellen des Verdichters der Verdichterhauptströmung entnommen werden kann. FIG 3 zeigt hierzu in einem Längsschnitt eine gehäuseseitige Kühlluftentnahme in einem Verdichter 10 einer Gasturbine 12. Die Entnahme von verdichteter Luft 42 aus der in einem ringförmigen Strömungspfad 14 strömenden Luft 18 erfolgt über eine Reihe von strahlenartig angeordneten Entnahmeöffnungen 40, die in der den Strömungspfad 14 außen begrenzenden Außenwand 26 angeordnet sind. Alle Entnahmeöffnungen 40 münden in einem Ringraum 44, welcher außerhalb der Außenwand 26 angeordnet ist und in dem die ausgekoppelte Luft gesammelt wird. Der Raum 44 selber ist radial außen von dem Gehäuse 32 des Verdichters 10 umgeben und somit begrenzt. Im Gehäuse 32 wiederum sind eine geringe Anzahl an größeren Öffnungen 64, beispielsweise drei oder vier Öffnungen über den Umfang verteilt, aus denen der dem Ringraum 44 zugeführte Teil 42 der verdichteten Luft abgeführt werden kann, um über weitere außerhalb der Gasturbine verlaufende, nicht weiter dargestellte Rohre der Turbine oder der Brennkammer zugeführt zu werden, wo die ausgekoppelte Luft bestimmungsgemäß zu Kühlzwecken der heißgasbeaufschlagten Bauteile verwendet wird.

Im ringförmigen Strömungspfad 14 des Verdichters 10 sind alternierend jeweils in Kränzen Leitschaufel 20 und Laufschaufeln 22 angeordnet, welche Leitschaufeln 20 gehäuseseitig, d.h. an der Außenwand 26 drehfest befestigt sind und welche Laufschaufeln 22 an der Innenwand 24 des ringförmigen Strömungspfads 14, d.h. am Rotor 24 mit diesem drehbar befestigt sind. Die Spitzen der Laufschaufeln 22 liegen unter Spaltbildung 36 der Außenwand des Strömungspfades 14 gegenüber, ebenso wie die Spitzen von freistehenden Leitschaufeln 20 der Innenwand 24 des Strömungspfads 14 gegenüberliegen. Um diese Spalte zwischen Rotor 24 und Stator für jede Betriebsphase so klein wie möglich zu halten, ist es notwendig, den Rotor 24 und den Stator thermisch möglichst gut auszubalancieren.

Systembedingt sind die Rotoren wegen ihrer hohen Masse und wegen geringerer innerer Durchströmung thermisch langsamer als die Gehäuse und dehnen sich dementsprechend langsamer aus. Insbesondere die bei transienten Betriebsbedingungen, beispielsweise dem Kaltstart oder beim Abschalten der Gasturbine, auftretenden, radialen und axialen Dehnungen müssen bei der Auslegung der notwendigen radialen und axialen Spalte berücksichtigt werden. Dieses wirkt sich nachteilig auf den benötigten Bauraum, auf die Robustheit der Anordnung und insbesondere auf den Gasturbinenwirkungsgrad insgesamt aus.

Darüber hinaus ist aus der US 5,203,162 ein Axialverdichter für eine Flugzeuggasturbine mit einer Luftentnahme bekannt. Vor der im Gehäuse angeordneten Luftentnahmeöffnung sind zwei radial gestapelte Ringräume vorhanden, die durch eine gemeinsame Trennwand voneinander getrennt sind. Dabei wird die innere Begrenzungswand des inneren Ringraums von der dem Strömungspfad des Verdichters bildende Ringwand geformt. Sowohl in der Ringwand als auch in der Trennwand sind dabei Öffnungen vorgesehen, durch die der dem Verdichter ausgekoppelte Teilstrom abströmen kann. Die Öffnungen der Ringwand und der Trennwand sind dabei zueinander axial versetzt angeordnet, um die von dem Hauptstrom mitgeführten Partikel, welche beispielsweise durch Abrieb von den Verdichterlaufschaufeln am Gehäuse entstehen, abzufangen und umzulenken, da deren Aufprall auf die vergleichsweise dünne äußere Gehäusewand vermieden werden soll.

Des Weiteren ist aus der US 5,160,241 ein dem Oberbegriff des Anspruch 1 entsprechender Verdichter mit mehreren Entnahmeöffnungen bekannt, bei dem der dem Verdichterhauptstrom ausgekoppelte Luftstrom über einen Ringraum weitergeleitet wird. Zur Vermeidung von unterschiedlicher thermischer Belastung entlang des Umfangs sind an jeder Entnahmeöffnung sammelraumseitig Umlenkbleche vorgesehen, die sich sektorförmig in Umfangsrichtung erstrecken. Die Leitbleche sind dabei jeweils nur lokal im Bereich der Entnahmeöffnungen vorgesehen. Mit Hilfe der Umlenkbleche wird vermieden, dass die im Sammelraum einströmende Luft entlang der inneren Fläche des Gehäuses strömen kann, wodurch die ungleiche thermische Belastung des Gehäuses reduziert werden kann.

Zudem ist aus der US 4,303,371 ein Führungsringsegment einer Turbine bekannt, welches mit Hilfe eines darin angeordneten u-förmigen Bleches prallkühlbar ist.

Aufgabe der Erfindung ist daher die Bereitstellung eines Verdichters für eine Gasturbine bzw. die Bereitstellung einer Gasturbine mit einem verbesserten Wirkungsgrad.

Die Lösung der Aufgabe sieht vor, dass im Sammelraum ein Trennelement vorgesehen ist, welches den Sammelraum in einen radial inneren Teilraum und einen radial äußeren Teilraum aufteilt.

Der Erfindung liegt die Erkenntnis zu Grunde, dass bisher in den Sammelräumen, d.h. in den Entnahmekammern, sehr schnell hohe Wärmeübergangskoeffizienten auftreten, die zu einer schnellen Aufheizung und damit schnellen thermisch bedingten Ausdehnung der Gehäusewand führen, wohingegen die Aufheizung des Rotors bisher wesentlich langsamer erfolgt.

Dies führte bei Gasturbinen mit einem verdichtereingangsseitigen Axiallager für Gehäuse und Rotor dazu, dass von sämtlich axialen Dehnungen von Gehäuse und Rotor sich auf diesen Punkt beziehen. Im Falle eines Kaltstarts führte das zu schnelle Aufheizen des Gehäuses im Bereich des Verdichters auch zu einer Verschiebung des Gehäuses im Bereich der Turbineneinheit. Da jedoch der Rotor aufgrund seiner thermischen Trägheit sich langsamer erwärmt als das Gehäuse, war dessen axiale Verschiebung aufgrund von Wärmedehnungen im Bereich der Turbineneinheit von geringerem Ausmaß als beim Turbinengehäuse. In Verbindung mit einem sich entlang der Maschinenachse erstreckenden, sich in Strömungsrichtung des Heißgases konischen aufweitenden Heißgaskanal der Turbineneinheit konnte dies zu einer Einschnürung der Radialspalte an den Turbinenlaufschaufeln durch das Gehäuse führen, indem während der Aufheizungsphase von Gehäuse und Rotor eine axiale Verschiebung des Turbinengehäuses gegenüber dem turbinenseitigen Rotorabschnitt in Richtung Turbinenausgang stattfand, welche nach Abschluss der thermischen Aufheizung und Dehnung des Rotors jedoch wieder kompensiert war. Um die Einschnürung weitgehend zu berücksichtigen, wurden daher vergleichsweise große Radialspalte in der Turbineneinheit, also zwischen Turbinenlaufschaufeln und den ihren Spitzen gegenüberliegenden, feststehenden Führungsringen, konstruiert.

Mit der Erfindung wird nun vorgeschlagen, dass durch eine Aufteilung des Sammelraums in einen radial inneren Teilraum und einen radial äußeren Teilraum die Geschwindigkeit des Aufheizens des Gehäuses im Bereich des Verdichters bei einem Kaltstart beeinflusst werden kann. Indem eine erzwungene Konvektion von entnommenem Teilstrom entlang der Innenseite des Gehäuses vermieden wird, kann der dortige Wärmeübergangskoeffizient zwischen Medium und Gehäusewand erheblich reduziert werden. Die Innenseite des Gehäuses wird nicht mehr unmittelbar konvektiv vom ausgekoppelten und zumeist sehr warmen Teilstrom überströmt. Vielmehr ist eine geschlossene Kammer, nämlich der radial äußere Teilraum, zwischen Gehäuseinnenseite und entnommener Luft vorhanden, in der nur noch eine freie Konvektion auftreten kann. Insofern dient der äußere Teilraum als Isolationshohlraum zwischen dem inneren Teilraum und dem Gehäuse. Folglich ist das Trennelement ein Abschirmelement für das Gehäuse, um den Wärmeeintrag des im inneren Teilraum strömenden Mediums in das Gehäuse - im Vergleich zu einem Sammelraum ohne Trennelement - wesentlich zu verringern.

Insbesondere der Wärmeübergangskoeffizient zwischen im Sammelraum strömenden Medium und Gehäuse kann so reduziert werden, so dass beim Kaltstart das Gehäuse des Verdichters sich langsamer erwärmt als es ohne Trennelement der Fall ist. Hierdurch kann eine Angleichung des thermischen Verhaltens von Rotor und Stator erreicht werden. Die Angleichung bewirkt, dass die Aufheizung von Rotor und Stator zeitgleich und in gleichem Maße erfolgen kann.

Durch das erfindungsgemäße Trennelement wird verhindert, dass der Großteil des der Hauptströmung des Verdichters ausgekoppelten Teils entlang der Innenseite des Gehäuses strömt. Die Aufheizung des Gehäuses und dessen Dehnung in Axialrichtung kann somit verzögert werden, was eine Angleichung des thermischen Verhaltens bzw. der thermischen Dehnungen von Gehäuse und Rotor bewirkt. Der zeitliche Abstand zwischen der dehnungsbedingten axialen Gehäuseverschiebung und der dehnungsbedingten axialen Rotorverschiebung kann so signifikant verkleinert werden.

Durch die Anwendung der Erfindung kann die voranbeschriebene zwischenzeitliche axiale Relativverschiebung von Turbinengehäuse und turbinenseitigem Rotorabschnitt, d.h. insbesondere Turbinenlaufschaufeln, während eines Kaltstarts verkleinert werden, da nun insbesondere das Verdichtergehäuse sich ähnlich träge erwärmt wie der Rotor und dementsprechend die thermisch bedingten Dehnungen von Rotor und Stator zeitlich aufeinander angepasst sind. Hierdurch können die Turbinenradialspalte (Kaltspalte) kleiner ausgelegt werden, was im stationären Betrieb die Radialspaltverluste verringert und demzufolge die Effizienz der Gasturbine wesentlich erhöht. Gleichfalls ist es dadurch möglich, die konstruktionsgemäß vorgesehene Größe der Spalte (Kaltspalte) zwischen den freien Enden der Verdichterschaufel und den ihnen gegenüberliegenden Wänden zu verkleinern, was sich beim stationären Betrieb des Verdichters bzw. der Gasturbine vorteilhaft auf den Wirkungsgrad auswirkt.

Zum Zwecke des Abführen des ausgekoppelten Teils des Mediums aus dem Gehäuse bzw. aus dem Sammelraum weist das Trennelement eine vergleichsweise große Abführöffnung auf, welche über einen Kanal mit der im Gehäuse angeordneten Öffnung verbunden ist. Hierdurch ist es möglich, den im inneren Teilraum strömenden Teil des Mediums aus dem Sammelraum bzw. aus dem Gehäuse herauszuführen. Der äußere Teilraum ist dabei - in Umfangsrichtung gesehen - durch denjenigen Kanal unterbrochen, welcher die im Gehäuse angeordnete Öffnung mit der im Trennelement angeordneten Abführöffnung verbindet. Die Unterbrechung kann den äußeren Teilraum in Umfangsrichtung gesehen auch nur teilweise aufteilen.

Vorteilhafte Ausgestaltungen sind in den Unteransprüchen angegeben.

Zweckmäßigerweise ist der Sammelraum - in Axialrichtung des Verdichters gesehen - von zwei Seitenwänden begrenzt, welche sich jeweils vom Gehäuse bis zur Außenwand erstrecken. Jede Seitenwand kann dabei teilweise oder vollständig von dem Gehäuse bzw. von einem Ansatz der Außenwand gebildet werden, welche dabei jeweils nach Art einer Nut und Feder ineinander übergehen können. Insgesamt ist somit der Sammelraum radial außen von dem Gehäuse, radial innen von der Außenwand des Strömungspfads sowie beidseitig von zwei Seitenwänden begrenzt. Hierdurch ergibt sich ein - bezogen auf die Maschinenachse des Verdichters - im Querschnitt ringförmiger Sammelraum.

Besonders einfach lässt sich der Sammelraum in einen radial inneren Teilraum und einen radial äußeren Teilraum aufteilen, wenn das Trennelement blechartig ist und die beiden Seitenwände jeweils eine Nut aufweisen, die einander gegenüberliegen und in denen das blechartige Trennelement eingesetzt ist. Aufgrund der üblicherweise vorhandenen Aufteilung des Gehäuses in eine untere und eine obere Gehäusehälfte kann das auch hälftig ausgebildete Trennelement zur Montage in die beiden Nuten einer jeden Gehäusehälfte eingeschoben und an einem zentralen Punkt fixiert werden. Vorzugsweise sitzt das Trennelement wärmebeweglich in den beiden umlaufenden Nuten. Hierdurch werden Spannungen im Trennelement vermieden. Das Trennelement kann dabei aus zwei jeweils 180° großen Blechsegmenten gebildet werden. Es könnten aber auch mehr Blechsegmente verwendet werden, welche dann selbstverständlich eine geringere Bogenerstreckung als 180°, bezogen auf die Maschinenachse, aufweisen.

Vorzugsweise ist das Trennelement näher zur Innenseite des Gehäuses angeordnet als zur Außenseite der Außenwand. Prinzipiell strömt nur im inneren Teilraum der gesamte, ausgekoppelte Teil des dem Strömungspfad entnommenen Mediums. Dem zur Folge sollte der quer zur Umfangsrichtung gesehene Querschnitt des inneren Teilraums wesentlich größer sein als der Querschnitt des äußeren Teilraums, da durch den inneren Teilraum der gesamte, zur Kühlung benötigte Kühlluftmassenstrom zu führen ist. Durch eine angemessene Dimensionierung, d.h. Größe des Querschnitts des inneren Teilraums kann eine vergleichsweise verlustarme Führung der ausgekoppelten Kühlluftströmung erreicht werden.

Um eine möglichst gleichmäßige Entnahme des auszukoppelnden Teils des Mediums aus dem Strömungspfad in den Sammelraum zu erreichen, weist die Außenwand eine Vielzahl von strahlenförmig angeordneten Entnahmeöffnungen auf. Insbesondere hierdurch ist es möglich, dem Sammelraum - entlang des Umfangs gesehen - gleichmäßig ausgekoppeltes Medium zuzuführen.

Vorzugsweise überdeckt der Sammelraum nur einen axialen Teilabschnitt des Strömungspfades des Verdichters. Folglich weist nicht der gesamte ringförmige Strömungspfad entlang seiner Erstreckung einen ihn umgebenden Sammelraum auf, sondern nur einen axialen Teilabschnitt. Besonders vorzugsweise ist der axiale Teilabschnitt in den hinteren Verdichterstufen eines Axialverdichters vorgesehen. Aufgrund der bei der Verdichtung des Mediums ansteigenden Mediumtemperatur kann die Erfindung insbesondere in demjenigen axialen Teilabschnitt des Verdichters vorteilhaft angewendet werden, in welchem die Mediumtemperatur besonders hoch ist. Dies ist in den hinteren Verdichterstufen der Fall, welche verdichterausgangsseitig vorgesehen sind. Insbesondere in diesem axialen Teilabschnitt ist es von Vorteil, aufgrund der beim Kaltstart höheren Temperaturdifferenz von ausgekoppelten Medium und Gehäusetemperatur das Gehäuse thermisch gegenüber dem ausgekoppelten Medium zu isolieren.

Zweckmäßigerweise kann der Verdichter mehrere axial zueinander beabstandete Sammelräume aufweisen, welche jeweils den Strömungspfad ringförmig umgreifen. Das erfindungsgemäße Trennelement kann dabei in einem Sammelraum, in mehreren Sammelräumen oder in allen Sammelräumen jeweils angeordnet sein.

Somit ist die Verwendung der Erfindung nicht nur auf die hinteren Verdichterstufen begrenzt, sondern die Erfindung kann auch bei mittleren Verdichterstufen, aber auch bei vorderen Verdichterstufen eingesetzt werden, sofern dies zweckdienlich ist.

Weitere strukturelle Merkmale und Vorteile werden in der nachfolgenden Figurenbeschreibung angegeben. Es zeigen:
- FIG 1: einen Ausschnitt aus einem Längsschnitt durch einen erfindungsgemäßen Verdichter einer Gasturbine,
- FIG 2: einen Ausschnitt durch den Querschnitt des Verdichters gemäß FIG 1 und
- FIG 3: einen Ausschnitt aus dem Längsschnitt eines aus dem Stand der Technik bekannten Verdichters einer Gasturbine.

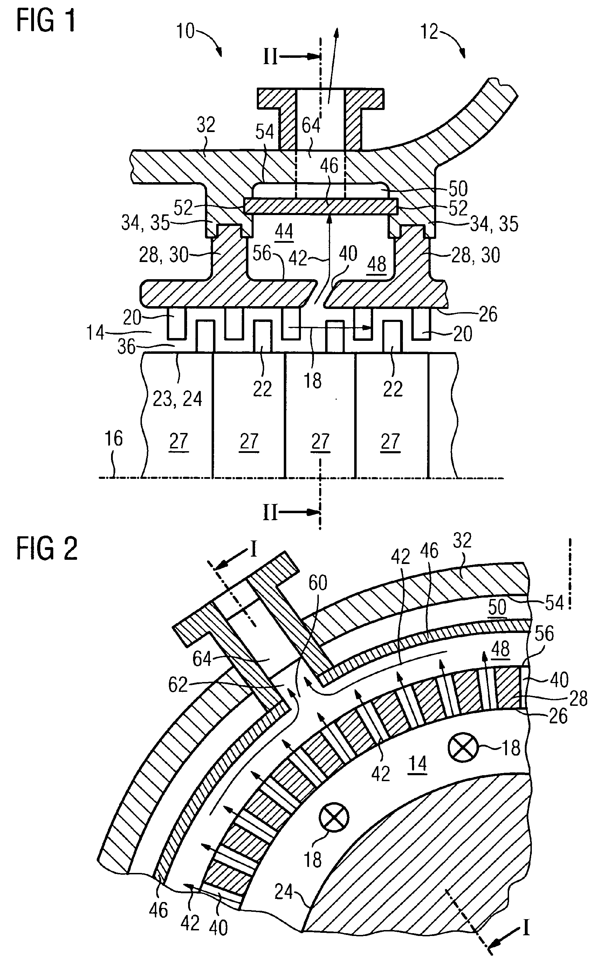

Einen erfindungsgemäßen ausgangsseitigen Teilabschnitt des Verdichters 10 einer Gasturbine 12 zeigt FIG 1 in einem Längsschnitt. In Analogie zu der in FIG 3 im Stand der Technik gewürdigten Verdichter 10 umfasst dieser einen Strömungspfad 14, welcher sich entlang einer Maschinenachse 16 erstreckt. Der Strömungspfad 14 ist im Querschnitt gesehen (vgl. FIG 2) ringförmig. Im Strömungspfad 14 sind entlang der Maschinenachse 16 hintereinander alternierend Leitschaufeln 20 sowie Laufschaufeln 22 jeweils in Kränzen angeordnet. Der Strömungspfad 14 wird radial innen von der Oberfläche 23 eines Rotors 24 der Gasturbine 12 begrenzt, welche von den Mantelflächen aneinanderliegender Rotorscheiben 27 gebildet wird. Radial außen wird der Strömungspfad 14 von einer im Querschnitt ringförmigen Außenwand 26 begrenzt. Die Außenwand 26 ist Teil eines den Rotor 24 ringförmig umgreifenden Leitschaufelträgers 28, in welchem die Verdichterleitschaufeln 20 in einer nicht dargestellten Umfangsverhakung eingeschoben sind. Der Leitschaufelträger 28 umfasst neben seiner im Wesentlichen zylindrischen Erstreckung auch zwei umlaufende Vorsprünge 30. Der Leitschaufelträger 28 wird von einem ringförmigen Gehäuse 32 umgriffen und ist dabei über zwei axial zueinander beabstandete, sich radial nach innen erstreckenden Vorsprünge 34 mit den sich radial nach außen erstreckenden Vorsprüngen 30 des Leitschaufelträgers 28 verbunden. Die Vorsprünge 30, 34 bilden paarweise jeweils eine Seitenwand 35. Axial zwischen den beiden Seitenwänden 35 und radial zwischen dem Gehäuse 32 und der Außenwand 26 ist somit ein Sammelraum 44 angeordnet, der im Querschnitt ringförmig ist und der den Strömungspfad 14 des Verdichters 10 konzentrisch zur Maschinenachse 16 umgreift. Anstelle einer zweiteiligen Konstruktion aus Leitschaufelträger 28 und Gehäuse 32 kann auch eine einstückige Konstruktion vorgesehen sein. In diesem Fall ist der Sammelraum in der Wand des kombinierten Leitschaufelträgergehäuses angeordnet.

In der Außenwand 26 des Leitschaufelträgers 28 sind strahlenförmig angeordnet mehrere Entnahmeöffnungen 40 (FIG 2) vorgesehen, von denen im Längsschnitt gemäß FIG 1 nur eine davon dargestellt ist. Durch die Entnahmeöffnung 40 kann gemäß Pfeil 42 ein Teil des im Strömungspfad 14 zu komprimierenden Mediums 18, nämlich Luft, ausgekoppelt werden.

Im Sammelraum 44 ist ein Trennelement 46 angeordnet. Das Trennelement 46 unterteilt den Sammelraum 44 in einen radial innen angeordneten Teilraum 48 sowie in einen radial außen angeordneten Teilraum 50. Radial außen und radial innen bezieht sich dabei jeweils auf die Maschinenachse 16. Die beiden Seitenwände 35 sind jeweils mit insgesamt ringförmigen Nuten 52 versehen, welche einander gegenüberliegenden. Das Trennelement 46 kann zur Montage in die einander gegenüberliegenden Nuten 52 eingeschoben werden und wärmebeweglich darin gelagert sein.

Der radiale Abstand zwischen dem Trennelement 46 und der Innenseite 54 des Gehäuses 32 ist dabei wesentlich kleiner als der radiale Abstand zwischen Trennelement 46 und der Außenseite 56 der Außenwand 26, d.h. der Außenseite 56 des Leitschaufelträgers 28. Das Trennelement 46 weist gemäß FIG 2 eine vergleichsweise große Abführöffnung 60 auf, welche über einen Kanal 62 mit der im Gehäuse 32 angeordneten Öffnung 64 verbunden ist. Hierdurch ist es möglich, den im inneren Teilraum 48 strömende, ausgekoppelte Teil 42 des Mediums 18 durch den Kanal 62 aus dem Gehäuse 32 bzw. aus dem Sammelraum 44 abzuführen, um ihn von dort aus über nicht weiter dargestellte Rohrleitungen zu den Bauteilen der Turbine der Gasturbine 12 zu führen, die zum Erreichen einer besonders langen Lebensdauer während des Betriebes der Gasturbine 12 dauerhaft gekühlt werden müssen.

Durch das Anbringen eines Trennelementes 46 im Sammelraum 44 des Verdichters 10 wird einerseits verhindert, dass der gesamte ausgekoppelte Teilstrom 42 entlang der Innenseite 54 des Gehäuses 32 streicht und dabei die von ihm mitgeführte Wärme besonders schnell dem Material des Gehäuses 32 zugeführt wird. Andererseits wird vermieden, dass die durch die Entnahmeöffnungen 40 radial nach außen strömende Luft unmittelbar auf die Innenseite 54 des Gehäuses 32 prallt und dieses dadurch besonders schnell erwärmt. Insgesamt wird dadurch vermieden, dass bei einem Kaltstart das Gehäuse 32 sich schneller erwärmt als der im inneren der Gasturbine 12 angeordnete Rotor 24. Das thermische Verhalten des Gehäuses 32 kann dadurch gegenüber dem thermischen Verhalten des Rotors 24 angeglichen werden, so dass beide Komponenten 24, 32 sich im Bereich dieses axialen Abschnittes annähernd synchron erwärmen können. Die konstruktionsbedingte Spalte zwischen den Spitzen der Leitschaufeln 20 und der Rotoroberfläche 23 und den Spitzen der Laufschaufeln 22 sowie der Außenwand 26 können somit kleiner ausgelegt werden, was beim stationären Betrieb der Gasturbine 12 die Spaltverluste erheblich reduziert. Gleichzeitig werden durch das angeglichene thermische Verhalten von Stator und Rotor 24 die beim transienten Betrieb auftretenden Radialspaltverluste in der Turbineneinheit reduziert. Durch die Reduzierung der Strömungsverluste bzw. Spaltverluste kann insgesamt eine Steigerung des Wirkungsgrads der Gasturbine erreicht werden.

Je nach Ausgestaltung des erfindungsgemäßen Trennelementes 46 und je nach gewähltem Abstand zwischen Innenseite 54 des Gehäuses 32 und Außenseite 56 des Leitschaufelträgers 28 kann es erforderlich sein, dass die im äußeren Teilraum 50 vorhandene Freikonvektion das Gehäuse 32 des Verdichters 10 nun im Vergleich zum Rotor 24 zu langsam erwärmt. Für diesen Fall ist es möglich, in das Trennelement 46 gleichmäßig verteilte, kleinere Öffnungen vorzusehen, um zumindest einen kleinen Teil der ausgekoppelten Luft 42 doch dem äußeren Teilraum 50 zuzuführen bzw. der Innenseite 54 des Gehäuses 32 entlang streichen zu lassen, um eine zu verlangsamte Erwärmung des Gehäuses 32 - in Bezug auf den Rotor 24 - zu verhindern.

Prinzipiell kann der Verdichter 10 nicht nur den einen dargestellten Sammelraum 44 aufweisen, sondern mehrere, axial zueinander benachbarte Sammelräume für die Entnahme von Kühlluft unterschiedlichen Druckes und Temperatur. Je nach Anforderung kann es möglich sein, dass lediglich in einem Sammelraum 44, in mehreren dieser Sammelräume oder in allen Sammelräumen jeweils ein Trennelement 46 angeordnet ist, um den Kontakt von ausgekoppelter Strömung mit der Innenseite 54 des Gehäuses 32 wesentlich einzuschränken und damit den Wärmeübergang von Kühlluft in das Gehäuse 32 zu verzögern.

Nach Möglichkeit kann der äußere Teilraum 50 von dem inneren Teilraum 48 dicht durch das Trennelement 46 getrennt sein. Da der äußere Teilraum 50 jedoch lediglich als Isolationsraum bzw. zur Verzögerung der Aufheizung des Gehäuses 32 dient, ist eine absolut dichte Abtrennung nicht zwingend erforderlich.

Insgesamt betrifft die Erfindung eine Maßnahme zur thermischen Anpassung eines Gehäuses 32 eines Verdichters 10 einer stationären Gasturbine 12 an dessen Rotor 24, wobei dem Verdichterluftstrom 18 ein Teilstrom 42 zur Kühlung von Gasturbinenbauteilen ausgekoppelt wird. Der Kontakt des im Verdichter 10 ausgekoppelten Teilstroms 42 mit der Innenseite 54 des Gehäuses 22 wird durch die geschickte Anordnung eines Trennelementes 46 in einen den Strömungspfad 14 ringförmig umgreifenden Sammelraum 44 wesentlich eingeschränkt bzw. sogar vermieden, um das frühzeitige thermische Aufheizen der Gasturbine 12 bzw. des Gehäuses 32 beim Kaltstart des Verdichters 10 zu verhindern.

## Patentansprüche

1. Verdichter (10) für eine Gasturbine (12),
mit einem im Querschnitt ringförmigen Strömungspfad (14) für ein darin zu komprimierendes Medium (18),
wobei der Strömungspfad (14) radial außen von einer im Querschnitt ringförmigen Außenwand (26) begrenzt ist, und mit einem Verdichtergehäuse (32), welches die Außenwand (26) unter Bildung mindestens eines dazwischen angeordneten Sammelraums (44) umgreift, und
mit zumindest einer Entnahmeöffnung (40) in der Außenwand (26) zum Auskoppeln eines Teils (42) des im Strömungspfad (14) strömenden Mediums (18) in den Sammelraum (44) sowie mit zumindest einer im Gehäuse (32) angeordneten Öffnung (64) zum Abführen des ausgekoppelten Teils (42) des Mediums (18) aus dem Gehäuse (32),
wobei im Sammelraum (44) ein den Sammelraum (44) in einen radial inneren Teilraum (48) und einen radial äußeren Teilraum (50) aufteilendes Trennelement (46) vorgesehen ist, um den Wärmeeintrag des im inneren Teilraum (48) strömenden Mediums (18) in das Gehäuse (32) im Vergleich zu einem Sammelraum (44) ohne Trennelement (46) wesentlich zu verringern,
wobei das Trennelement (46) zumindest eine Abführöffnung (60) aufweist, die über einen Kanal (62) mit der im Gehäuse (32) angeordneten Öffnung (64) zum Abführen des ausgekoppelten Teils (42) des Mediums (18) aus dem Gehäuse (32) verbunden ist,
**dadurch gekennzeichnet,**
**dass** der äußere Teilraum (50) als eine geschlossene Kammer ausgebildet ist, welche als Isolationshohlraum zwischen dem inneren Teilraum (48) und dem Gehäuse (32) dient.

2. Verdichter (10) nach Anspruch 1,
bei dem der Sammelraum (44) - in Axialrichtung des Verdichters (10) gesehen - von zwei Seitenwänden (35) begrenzt ist,
welche sich jeweils vom Gehäuse (32) bis zur Außenwand (26) erstrecken.

3. Verdichter (10) mach Anspruch 2,
bei dem das Trennelement (46) blechartig ist und die beiden Seitenwände (35) jeweils eine Nut (52) aufweisen, die einander gegenüber liegen und in denen das blechartige Trennelement (46) eingesetzt ist.

4. Verdichter (10) nach Anspruch 1, 2 oder 3,
bei dem das Trennelement (46) näher zur Innenseite (54) des Gehäuses (32) als zur Außenseite (56) der Außenwand (26) angeordnet ist.

5. Verdichter (10) nach einem der vorangehenden Ansprüche,
der in seiner Außenwand (26) eine Vielzahl von strahlenförmig angeordneten Entnahmeöffnungen (40) aufweist.

6. Verdichter (10) nach einem der vorangehenden Ansprüche,
bei dem der Sammelraum (44) nur einen axialen Teilabschnitt des Strömungspfades (14) des Verdichters (10) überdeckt.

7. Verdichter (10) nach Anspruch 6,
bei dem der axiale Teilabschnitt - bezogen auf das Medium (18) - in den hinteren Verdichterstufen vorgesehen ist.

8. Verdichter (10) nach einem der vorangehenden Ansprüche, mit mehreren Sammelräumen, wobei lediglich in einem Sammelraum (44), in mehreren Sammelräumen oder in allen Sammelräumen jeweils ein Trennelement (46) angeordnet ist.

9. Stationäre, axial durchströmbare Gasturbine (12) mit einem Verdichter (10) nach einem der vorangehenden Ansprüche.

## Claims

1. Compressor (10) for a gas turbine (12),
with a flow path (14), which is annular in cross section, for a medium (18) which is to be compressed therein,
wherein the flow path (14) is delimited radially on the outside by an outer wall (26) which is annular in cross section, and with a compressor casing (32) which encompasses the outer wall (26), forming at least one collecting chamber (44) which is arranged in between, and
with at least one bleed opening (40) in the outer wall (26) for extracting a part (42) of the medium (18) which flows in the flow path (14) into the collecting chamber (44), and also with at least one opening (64) which is arranged in the casing (32) for discharging the extracted part (42) of the medium (18) from the casing (32),
wherein provision is made in the collecting chamber (44) for a separating element (46) which divides the collecting chamber (44) into a radially inner collecting chamber (48) and a radially outer collecting chamber (50), in order to significantly reduce the heat yield of the medium (18) which flows in the inner chamber section (48) to the casing (32) in comparison to a collecting chamber (44) without separating element (46),
wherein the separating element (46) has at least one discharge opening (60) which via a passage (62) is connected to the opening (64) which is arranged in the casing (32) for discharging the extracted part (42) of the medium (18) from the casing (32),
**characterized in that**
the outer chamber section (50) is formed as a closed chamber which serves as an insulating cavity between the inner chamber section (48) and the casing (32).

2. Compressor (10) according to Claim 1,
in which the collecting chamber (44), as seen in the axial direction of the compressor (10), is delimited by two sidewalls (35),
which extend in each case from the casing (32) to the outer wall (26).

3. Compressor (10) according to Claim 2,
in which the separating element (46) is like a plate and the two sidewalls (35) have a slot (52) in each case, which lie opposite each other and in which the plate-like separating element (46) is inserted.

4. Compressor (10) according to Claim 1, 2 or 3,
in which the separating element (46) is arranged closer to the inner side (54) of the casing (32) than to the outer side (56) of the outer wall (26).

5. Compressor (10) according to one of the preceding claims,
which in its outer wall (26) has a large number of radially arranged bleed openings (40).

6. Compressor (10) according to one of the preceding claims,
in which the collecting chamber (44) covers only an axial section of the flow path (14) of the compressor (10).

7. Compressor (10) according to Claim 6,
in which the axial section is provided in the rear compressor stages, with regard to the medium (18).

8. Compressor (10) according to one of the preceding claims, with a plurality of collecting chambers, wherein a separating element (46) is arranged only in one collecting chamber (44), in a plurality of collecting chambers, or in all the collecting chambers in each case.

9. Stationary gas turbine (12) which is exposed to axial throughflow, with a compressor (10) according to one of the preceding claims.

## Revendications

1. Compresseur ( 10 ) pour une turbine ( 12 ) à gaz,
comprenant un trajet ( 14 ) d'écoulement de section transversale annulaire pour un fluide ( 18 ) à air comprimé, dans lequel le trajet ( 14 ) d'écoulement est délimité radialement vers l'extérieur par une paroi ( 26 ) extérieure de section transversale annulaire, et
comprenant un carter ( 32 ) de compresseur, qui entoure la paroi ( 26 ) extérieure en formant au moins un espace ( 44 ) collecteur disposé entre eux,
comprenant au moins une ouverture ( 40 ) de prélèvement dans la paroi ( 26 ) extérieure pour retirer une partie ( 42 ) du fluide ( 18 ) en écoulement dans le trajet ( 14 ) d'écoulement dans l'espace ( 44 ) collecteur ainsi que comprenant au moins une ouverture ( 64 ) pratiquée dans le carter ( 32 ) pour évacuer du carter ( 32 ) la partie ( 42 ) retirée du fluide ( 18 ),
dans lequel dans l'espace ( 44 ) collecteur est prévu un élément ( 46 ) de séparation subdivisant l'espace ( 44 ) collecteur en un sous-espace ( 48 ) intérieur radialement et en un sous-espace ( 50 ) extérieur radialement, pour diminuer sensiblement l'apport de chaleur du fluide ( 18 ) s'écoulant dans le sous-espace ( 48 ) intérieur au carter ( 32 ) par rapport à un espace ( 44 ) collecteur sans élément ( 46 ) de séparation,
dans lequel l'élément ( 46 ) de séparation a au moins une ouverture ( 60 ) d'évacuation, qui communique par un canal ( 62 ) avec l'ouverture ( 64 ) disposée dans le carter ( 32 ) pour évacuer du carter ( 32 ) la partie ( 42 ) retirée du fluide ( 18 ),
**caractérisé**
**en ce que** le sous-espace ( 50 ) extérieur est constitué sous la forme d'une chambre fermée, qui sert d'espace creux isolant entre le sous-espace ( 48 ) intérieur et le carter ( 32 ).

2. Compresseur ( 10 ) suivant la revendication 1,
dans lequel l'espace ( 44 ) collecteur est délimité, considéré dans la direction axiale du compresseur ( 10 ), par deux parois ( 35 ) latérales,
qui s'étendent respectivement du carter ( 32 ) jusqu'à la paroi ( 26 ) extérieure.

3. Compresseur ( 10 ) suivant la revendication 2,
dans lequel l'élément ( 46 ) de séparation est du type en tôle et les deux parois ( 35 ) latérales ont respectivement une rainure ( 52 ), qui sont en regard l'une de l'autre et dans lesquelles l'élément ( 46 ) de séparation de type tôle est inséré.

4. Compresseur ( 10 ) suivant la revendication 1, 2 ou 3, dans lequel l'élément ( 46 ) de séparation est disposé plus près de la face ( 54 ) intérieure du carter ( 32 ) que de la face ( 56 ) extérieure de la paroi ( 26 ) extérieure.

5. Compresseur ( 10 ) suivant l'une des revendications précédentes,
qui comporte, dans sa paroi ( 26 ) extérieure, une pluralité d'ouvertures ( 40 ) de prélèvement disposées en forme de rayon.

6. Compresseur ( 10 ) suivant l'une des revendications précédentes,
dans lequel l'espace ( 44 ) collecteur ne recouvre qu'un tronçon axial du trajet ( 14 ) d'écoulement du compresseur ( 10 ).

7. Compresseur ( 10 ) suivant la revendication 6,
dans lequel la section axiale est prévue rapportée au fluide ( 18 ) dans les étages arrières du compresseur.

8. Compresseur ( 10 ) suivant l'une des revendications précédentes,
comprenant plusieurs espaces collecteurs, dans lequel respectivement un élément ( 46 ) de séparation est disposé seulement dans un espace ( 44 ) collecteur, dans plusieurs espaces collecteurs ou dans tous les espaces collecteurs.

9. Turbine ( 12 ) à gaz fixe pouvant être parcourue axialement comprenant un compresseur ( 10 ) suivant l'une des revendications précédentes.
